# EUROPEAN PATENT SPECIFICATION

(11) **EP 3 345 868 B1**
(45) Date of publication and mention of the grant of the patent: **14.12.2022**
(21) Application number: 17150852.6
(22) Date of filing: 10.01.2017
(51) Int. Cl.: C01B 35/14, C01B 3/00, C01B 3/04, C01B 32/198

(54) **AMMONIA BORANE CONFINEMENT IN GRAPHENE OXIDE 3D STRUCTURES**
AMMINBORANINSCHLUSS IN 3D-GRAPHENOXIDSTRUKTUREN
CONFINEMENT DE BORAZANE DANS DES STRUCTURES 3D D'OXYDE DE GRAPHÈNE

(43) Date of publication of application: 11.07.2018
(73) Proprietor: Airbus Defence and Space GmbH, 82024 Taufkirchen (DE); Airbus Operations GmbH, 21129 Hamburg (DE)
(72) Inventor: Godula-Jopek, Agata, 82024 Taufkirchen (DE); Gregory, H.Duncan, Cardross, Argyll & Bute G82 5EZ (GB); Champet, Simon, G206QS, Glasgow (GB); Westenberger, Andreas, 21129 Hamburg (DE); Warmuzinski, Krzysztof, 41-803 Zabrze (PL)
(74) Representative: LKGLOBAL Lorenz & Kopf PartG mbB Patentanwälte

(56) References cited:
- ZIWEI TANG ET AL: "Graphene Oxide Based Recyclable Dehydrogenation of Ammonia Borane within a Hybrid Nanostructure", JOURNAL OF THE AMERICAN CHEMICAL SOCIETY, vol. 134, no. 12, 28 March 2012 (2012-03-28), pages 5464-5467, XP055381717, US ISSN: 0002-7863, DOI: 10.1021/ja300003t
- S. CHARNVANICHBORIKARN ET AL: "Ice templating synthesis of low-density porous Cu?C nanocomposites", JOURNAL OF MATERIALS CHEMISTRY A: MATERIALS FOR ENERGY AND SUSTAINABILITY, vol. 2, no. 43, 1 January 2014 (2014-01-01), pages 18600-18605, XP055381720, GB ISSN: 2050-7488, DOI: 10.1039/C4TA02731K
- ZENG MIN ET AL: "Preparing three-dimensional graphene architectures: Review of recent developments", CHINESE PHYSICS B, CHINESE PHYSICS B, BRISTOL GB, vol. 22, no. 9, 25 September 2013 (2013-09-25), page 98105, XP020250421, ISSN: 1674-1056, DOI: 10.1088/1674-1056/22/9/098105 [retrieved on 2013-09-25]
- SAGHAR SEPEHRI ET AL: "Spectroscopic Studies of Dehydrogenation of Ammonia Borane in Carbon Cryogel", JOURNAL OF PHYSICAL CHEMISTRY PART B: CONDENSED MATTER, MATERIALS, SURFACES, INTERFACES & BIOPHYSICAL, vol. 111, no. 51, 1 December 2007 (2007-12-01), pages 14285-14289, XP055381725, US ISSN: 1520-6106, DOI: 10.1021/jp077057t

## Description

### Field of the Invention:

The present invention relates to a composite comprising a porous graphene oxide material and ammonia borane and a method for producing the same. The invention also relates to a hydrogen-releasing device comprising a composite comprising a porous graphene oxide material and ammonia borane as well as to an energy-producing device comprising a composite comprising a porous graphene oxide material and ammonia borane. Moreover, the invention relates to the use of said hydrogen-releasing device and/or said energy-producing device to supply electrical power to local components of an aircraft.

### Background of the invention:

Various local components used in mobile applications such as cars or aircraft require electrical power. Many of these components, and in particular safety equipment, are separate from the electrical components that are actually required to run the mobile application (for instance the navigation system, fuel gauges, flight controls, and hydraulic systems of an aircraft). For instance, in an aircraft such local components are various types of cabin equipment such as area heaters, cabin ventilation, independent ventilation, area or spot lights such as cabin lights and/or reading lights for passenger seats, high comfort seats, water supply, charging stations for passenger electronics and electrical sockets, galley and galley devices, emergency lighting, emergency torches, electrical equipment of life rafts, ram air turbines and also auxiliary power units (APU) for mission aircrafts.

Fuel cells have recently attracted attention as clean energy sources. The technology of fuel cell systems combines a source of hydrogen (i.e. a fuel) with oxygen from the air to produce electrical energy as a main product by using a fuel cell catalyst. In addition to electrical power, a fuel cell system produces thermal power (i.e. heat), water or water vapor and oxygen-depleted air. These by-products are far less harmful than carbon dioxide emissions produced by electric power generating devices burning fossil fuels. Consequently, the use of fuel cells to produce electrical energy especially in aircraft is desirable.

However, fuel cells require hydrogen of high purity, since various gases are poisonous for fuel cell catalysts. Such fuel cell poisons are in general carbon-, boron- or nitrogen-containing gases, such as for instance carbon monoxide, carbon dioxide, ammonia and borazine and, in particular, carbon monoxide. All of these exemplified compounds are also toxic for humans. In other words, a lower release of any of the aforementioned catalyst poisoning gases, and in particular of carbon monoxide and carbon dioxide, is principally desirable for any material having hydrogen storage ability, i.e. which may be used to directly or indirectly store hydrogen. Hence, an effective elimination of the aforementioned catalyst poisoning gases from a stream of hydrogen increases the lifetime and efficiency of a fuel cell catalyst and further reduces the toxic risk for humans.

Hydrogen and its storage in the solid state requires an elusive set of criteria to be met before it can be considered viable as a replacement for fossil fuels as a sustainable energy carrier. This is particularly true when its use is considered for mobile applications such as for instance in cars or even airplanes. Relevant criteria for assessing the suitability of potential hydrogen storage materials are for instance the hydrogen capacity (weight %; kg hydrogen / kg system) of the material, the temperature range for the dehydrogenation temperature, the system volumetric density (g/L; kg hydrogen / L system), charging and discharging rates such as the system fill time (fueling rate, kg/min), the storage system costs ($/kg hydrogen) and the operational cycle life. The US department of Energy (DoE) has determined targets for each of these criteria; for instance the 2015 target for the hydrogen capacity is ≥ 5,5%, with an ultimate system target of ≥ 7,5%. Likewise, the DoE target for the system volumetric density is ≥ 40 g/L in 2015 with an ultimate system target of ≥ 70 g/L. The present DoE target for the dehydrogenation temperature range is from -45 to 85 °C.

Several materials have been proposed for hydrogen storage from physisorbing porous solids at cryogenic temperatures to complex hydrides forming chemical bonds to hydrogen at much higher operating temperatures. The landscape of hydrogen storage materials presently available is mainly composed of metal hydrides, chemical hydrides (also called "chemical hydrogen") and adsorbents which are porous solids. Metal hydrides provide pure hydrogen but, however, release it only at high temperature and are predominantly air sensitive. The disadvantages of adsorbents are the low operating temperatures which are not suitable for mobile applications and most experimental studies also show that this class of hydrogen storage materials have low volumetric and gravimetric hydrogen densities, in particular in case they have a dehydrogenation temperature of -180°C or higher. Chemical hydride materials have intermediate dehydrogenation temperature with suitable hydrogen capacity but can release toxic gases which may poison fuel cell catalysts as by-products. In other words, so far there are no materials available which meet all DoE targets and each of the best-performing known hydrogen storage materials have respective advantages and disadvantages that must be considered when using hydrogen storage systems for a particular application.

Carbon has been studied intensively as a potential hydrogen storage material and falls into the category of materials that weakly bind to hydrogen. Its abundance and low cost renders it a potentially very attractive option, but its storage performance - even when used in exotic nanostructured forms such as fullerenes and nanotubes - has never been competitive compared to other materials with far superior gravimetric and volumetric capacities. Recently, also graphene, a one-atom-thick planar sheet of sp²-bonded carbon atoms which is densely packed in a two-dimensional (2D) honeycomb structure, has been studied for potential application as hydrogen storage material. However, most of the studies are computational chemistry studies and very few of them provide experimental data. Although graphene and graphene related materials, such as fullerenes (zero-dimensional), carbon nanotubes (one-dimensional) or graphite (three-dimensional stack of two -dimensional graphene layers), have been theoretically predicted as good hydrogen storage materials, no experimental work so far proved these theoretical studies. Most of the experimental data published on carbon compounds for hydrogen storage reveals the impact of the temperature and pressure during the process but does not prove that graphene and/or graphene-related materials have any significant increased activity of hydrogen uptake. Table 1 summarizes the experimental work on graphene related materials and illustrates that experiments performed under liquid nitrogen, i.e. at low temperatures, show much higher weight ratios of stored hydrogen than examples performed at room temperature. Table 1 also shows that the effective amount of hydrogen uptake in weight% is even at low temperature far below the respective DoE targets.

**Table. 1**

| Authors | Material | Temperature (K) | Pressure (MPa) | Hydrogen uptake (wt.%) |
|---|---|---|---|---|
| Lan and Mukasyan¹ | carbon nanotubes | room temp. | 11.5 | <0.2 |
| Ning et al.² | MWNTs | room temp. | 12 | ≤0.3 |
| Ning et al.² | MWNTs | 77 | 12 | ≤2.27 |
| Takagi et al.³ | SWNTs | 77 | 0.1 | 0.8 |
| Takagi et al.³ | acid-treated | 77 | 0.1 | 1.8 |
| Gogotsi et al.⁴ | SWNTs | 77 | 0.1013 | 0.92 |
| Gogotsi et al.⁴ | MWNTs | 77 | 0.1013 | 0.25 |

| | | | | |
|---|---|---|---|---|
| MWNTs: Multi Walled Nano Tubes SWNTs: Single Walled Nano Tubes ¹: Lan and Mukasyan, J. Phys. Chem. B, 2005, vol. 109, no. 33, pp. 16011-16016. ²: Ning, G., Wei, F., Luo, G. et al., Appl. Phys. A, vol. 78, no. 7, pp. 955-959. ³: Takagi et al, Aust. J. Chem., vol. 60, no. 7, pp. 519-523. ⁴: Gogotsi et al, J. Am. Chem. Soc., 2005, vol. 127, no. 46, pp. 16006-16007. | | | | |

For instance, Takagi et al. noted a diminution of the hydrogen adsorption/uptake by a factor ten between 77 K and 303 K. This diminution of weight% is logical as the temperature rises. Adsorption is well known to be more efficient (i.e. higher) at low temperatures and high pressures. However, cryogenic operations conditions are far from ideal for cheap and practical use and even more especially for transport purpose.

Based on density functional calculations, Y. Yürüm at al. (Int. J. Hydrogen Energy, vol. 34, no. 9, pp. 3784-3798) have further proposed that titanium, scandium, platinum, and palladium dispersed on carbon nanotubes or fullerene and other aromatic hydrocarbons increases the hydrogen storage capacity. Ao et al. (Int. J. Hydrogen Energy, vol. 39, no. 28, pp. 16244-16251) report from theoretical calculations that aluminum decorated graphene should absorb 10.5 weight% of hydrogen. Similar theoretical studies have been performed for carbon nanotubes, fullerenes and other carbonaceous materials according to which titanium, palladium, platinum, calcium and magnesium enhance the hydrogen uptake of these materials. However, also here, no experimental work is available which proves all these theoretical solutions.

Ziwei Tang et al. (Journal of the American Chemical society, vol. 134, no.12, pp. 5464-5467) describes that the recyclable dehydrogenation of ammonia borane is achievable within a graphene oxide-based hybrid nanostructure, in which a combined modification strategy of acid activation and nanoconfinement by graphene oxide allows ammonia borane to release more than 2 equiv of pure H₂ at temperatures below 100°C.

Therefore, there is a need for new composite materials having increased hydrogen capacity as well as lower dehydrogenation temperature. Moreover, it is desirable that such new composite materials release hydrogen having a high purity and in particular hydrogen containing only very low amounts of carbon monoxide and carbon dioxide and of other fuel cell catalyst poisons such as ammonia, diborane and borazine. Moreover, it is desirable that such new composite materials are not fine powders so that they cannot be eluted from a hydrogen storage device comprising such composite and that there is less toxic risk. Moreover, it is desirable that such new composite materials are robust and easy to handle. Furthermore, there is a need for a method to prepare such new composite materials.

### Brief description of the drawings:

Figure 1 shows a schematic view of preparing a composite of the present invention having laminar porosity (Figure 1a) or radial porosity (Figure 1b).
Figure 2 shows a picture obtained by scanning electron microscopy (SEM; XL30 microscope from Philips (Amsterdam, The Netherlands) equipped with an INCA500 detector from Oxford Instruments (Abingdon, United Kingdom)) of a graphene oxide material (A) which may be used in the composite of the present invention having laminar porosity (Figure 2a) or radial porosity (Figure 2b).
Figure 3 shows a picture obtained by SEM (Philips XL30 microscope equipped with an Oxford Instruments INCA500 detector) of a graphene oxide material (A) which may be used in the composite of the present invention of the present invention having radial porosity (Figures 3a and 3b).
Figure 4 shows plots of the release of carbon monoxide and carbon dioxide during a first cycle (Figure 4a) and a second cycle (Figure 4b) of a heat pre-treatment of a graphene oxide material (A) according to the present invention as determined by simultaneous thermal analysis-mass spectrometry (STA-MS) analyses as well as the thermal stability of a graphene oxide material (A) which has been heat pre-treated (Figure 4c).
Figure 5 shows a picture of the composite of the present invention obtained by SEM (Philips XL30 microscope equipped with an Oxford Instruments INCA500 detector).
Figure 6 shows a plot of the results of a STA-MS study of a composite according to the present invention.

### Summary of the invention:

The present invention provides a composite comprising a porous graphene oxide material (A) and ammonia borane (B) wherein the porous graphene oxide material (A) has a density of 1-100 mg/cm³.

In one embodiment, the composite of the present invention comprises porous graphene oxide material (A) having a density of 5-50 mg/cm³ and preferably of 8-20 mg/cm³.

In one embodiment of the composite of the present invention, the porous graphene oxide material (A) comprises graphene oxide sheets and/or walls which are an assembly of graphene oxide sheets.

In one embodiment of the composite of the present invention, the graphene oxide sheets and/or the walls of the porous graphene oxide material (A) are 1-100 µm, preferably 5-50 µm and most preferably 20-40 µm apart.

In one embodiment of the composite of the present invention, the graphene oxide material (A) has a radial porosity or laminar porosity.

In one embodiment of the present invention, the composite has a sandwich-like structure with the ammonia borane (B) being confined between the graphene oxide sheets and/or walls of graphene oxide sheets.

In one embodiment of the present invention, the composite has a monolith form or a bead form and preferably a bead form.

In one embodiment of the composite of the present invention, the graphene oxide material (A) is obtainable by a method comprising the steps of
(I) sonication dispersion of a graphene oxide suspension,
(II) ice templating of the sonicated graphene oxide suspension so to obtain frozen monoliths or beads of the graphene oxide suspension, and
(III) freeze drying the obtained frozen monoliths or beads of the graphene oxide suspension.

In one embodiment of the present invention, the composite is obtainable by a method comprising the steps of
(i) sonication dispersion of a suspension comprising graphene oxide and ammonia borane (B),
(ii) ice templating of the sonicated suspension comprising graphene oxide and ammonia borane (B) so to obtain frozen monoliths or beads of the suspension comprising graphene oxide and ammonia borane (B), and
(iii) freeze drying the obtained frozen monoliths or beads of the suspension comprising graphene oxide and ammonia borane (B).

In one embodiment of the composite of the present invention, the ice-templating is performed by
(ii-a) dropping the sonicated graphene oxide suspension or sonicated suspension of graphene oxide and ammonia borane (B) into a cooling agent, preferably into a liquid gas, and most preferably into liquid nitrogen, or
(ii-b) pouring the sonicated graphene oxide suspension or sonicated suspension of graphene oxide and ammonia borane (B) into a mould on a metallic plate which is subsequently put on the surface of a cooling agent, preferably a liquid gas, and most preferably liquid nitrogen, and cooling the suspension.

The present invention further provides a method for preparing a composite comprising the steps of
(i) sonication dispersion of a suspension comprising graphene oxide and ammonia borane (B),
(ii) ice templating of the sonicated suspension comprising graphene oxide and ammonia borane (B) so to obtain frozen monoliths or beads of the suspension comprising graphene oxide and ammonia borane (B) and
(iii) freeze drying the obtained frozen monoliths or beads of the suspension comprising graphene oxide and ammonia borane (B).

The present invention further provides a composite, which is obtainable by the above method.

The present invention further provides a hydrogen-releasing device comprising the composite of the present invention.

The present invention further provides an energy-producing device comprising the composite of the present invention.

The present invention further provides the use of the hydrogen-releasing device of the present invention or the energy-producing device of the present invention to supply electrical power to the local components of an aircraft.

### Detailed description:

The present invention provides a composite comprising a porous graphene oxide material (A) and ammonia borane (B) wherein the porous graphene oxide material (A) has a density of 1 to 100 mg/cm³.

### Porous graphene oxide material (A):

The porous graphene oxide (A) is used as the matrix in the composite of the present invention and has a density of 1-100 mg/cm³, preferably of 5-50 mg/cm³ and more preferably of 8-20 mg/cm³ such as for instance from 8-15 mg/cm³ or 8-12 mg/cm³. Measurement methods to determine the density are not limited and generally known to the skilled person. For instance, the density of the porous graphene oxide (A) may be measured using helium pycnometry. In this method a sample density is determined by measurement of buoyancy using an inert gas which is typically helium. The procedure is similar to static gas sorption except that pressure regulation is not required. For instance, pycnometry measurements can be performed using an Intelligent Gravimetric Analyser (IGA) from Hiden Isochema (Warrington, United Kingdom). For instance, the IGA manual (for instance Issue E from 2007; document number HA-085-060), and in particular Section 4.3 (Sample Density Determination) and Appendix B (Buoyancy Correction) of the thereof, provide a detailed density measurement protocol. Additionally, more details about general techniques of density measurement are for instance provided in "Characterization of porous solids and powders: surface area, pore size, and density" by S. Lowell, Joan E. Shields, Martin A. Thomas and Matthias Thommes, Springer, 2006.

The porous graphene oxide material (A) may further comprise walls which are an assembly of graphene oxide sheets.

A graphene oxide sheet is a monoatomic layer of graphene oxide, i.e. a single atomic sheet of graphene oxide containing sp²-bonded carbon atoms as well as sp³-bonded carbon atoms in a basically honeycomb-like structure, wherein the sp³-bonded carbon atoms are bonded to an oxygen atom which may be located below or above the horizontal plane of the layer formed by the sp²-bonded carbon atoms. In other words, the sp²-bonded carbon atoms are densely packed in a honeycomb crystal lattice and this lattice is slightly broken up at the positions of the sp³-bonded carbon atoms which are additionally bonded to an oxygen atom. Hence, the monoatomic layer of graphene oxide is one carbon atom in thickness, with oxygen atoms located below and/or above the horizontal plane of the layer formed by the sp²-bonded carbon atoms.

An assembly of several, i.e. more than one, and up to hundred or even thousand, monoatomic layers of graphene oxide which are closely stacked together may form a wall, i.e. a layer. In other words, in a wall of graphene oxide sheets, multiple graphene oxide sheets are densely packed. Such wall of several graphene oxide sheets has a higher stability and rigidity than a single graphene oxide sheets. The wall thickness is for instance tunable via the temperature gradient used in a method to prepare the porous graphene oxide material (A) as is described below.

The ratio of carbon atoms to oxygen atoms (C/O atomic ratio) in the graphene oxide sheet as well as in the wall of graphene oxide sheets may range from 100/1 to 1/1, such as from 50/1 to 1/1 or from 20/1 to 1/1 and is preferably between 10/1 and 1/1 and more preferably between 5/1 to 1/1 such as 2.5/1 to 1.2/1. If the C/O atomic ratio is from 5/1 to 1/1 or even from 2.5/1 to 1.2/1, due to a high amount of oxygen atoms, the porous graphene oxide material (A) may trap a higher amount of ammonia borane as will be described below. In other words, such porous graphene oxide material (A) may store a higher amount of ammonia borane and, hence, may release a higher amount of hydrogen.

The porous graphene oxide material (A) may comprise multiple, i.e. numerous, graphene oxide sheets and/or walls of graphene oxide sheets. The graphene oxide sheets and/or the walls of graphene oxide sheets of the porous graphene oxide material (A) may be 1-100 µm, preferably 5-50 µm and more preferably 20-40 µm apart from each other. In other words, this is the average distance between two adjacent and basically parallel to each other located graphene oxide sheets and/or walls of graphene oxide sheets. It goes without saying that the porous graphene oxide material (A) may also contain some distance holders made of graphene oxide, which for instance have the shape of columns, pillars, walls or part of walls which may be arranged diagonal or perpendicular or at least basically perpendicular to the horizontal planes of the basically parallel adjacent graphene oxide sheets and/or walls of graphene oxide sheets in order to achieve the above mentioned average distance between graphene oxide sheets and/or walls of graphene oxide sheets. in other words, the porous graphene oxide material (A) forms a three-dimensional (3D) structure.

The graphene oxide material (A) is porous. Porous materials are typically characterized by their surface area (m²/g), pore volume (cc/g) and pore size distribution (Å) usually determined by using nitrogen adsorption at 77 K. The Brunauer-Emmett-Teller (BET) method is the most widely used procedure for the determination of the surface area of solid materials and is generally known to the skilled person. For instance, porosity may be determined using a Quadrasob Evo device from Quantachrome Instruments (Florida, USA). The Quadrasob Evo User Manual version 6.0 provides a detailed protocol as well as theory for the porosity measurement. More details on the characterization of porous material are for instance provided in the IUPAC (International Union of Pure and Applied Chemistry) technical report of 1994 (Pure & Appl. Chern., vol. 66, no. 8, pp. 1739-1758), in the publication "Characterization of porous solids and powders: surface area, pore size, and density" by S. Lowell, Joan E. Shields, Martin A. Thomas and Matthias Thommes, Springer, 2006 and/or in the BET method original publication (J. Am. Chem. Soc., 1938, vol. 60, no. 2, pp 309-319). As used herein, porosity also describes the macroscopic structure of the porous graphene oxide material, namely the position of more than one, i.e. multiple, graphene oxide sheets and/or walls of graphene oxide sheets relative to each other. The voids of the porous material are the spaces between the more than one, for instance multiple, graphene oxide sheets and/or walls of graphene oxide sheets.

In particular, the porous graphene oxide material (A) may have a laminar porosity or radial porosity and preferably a radial porosity.

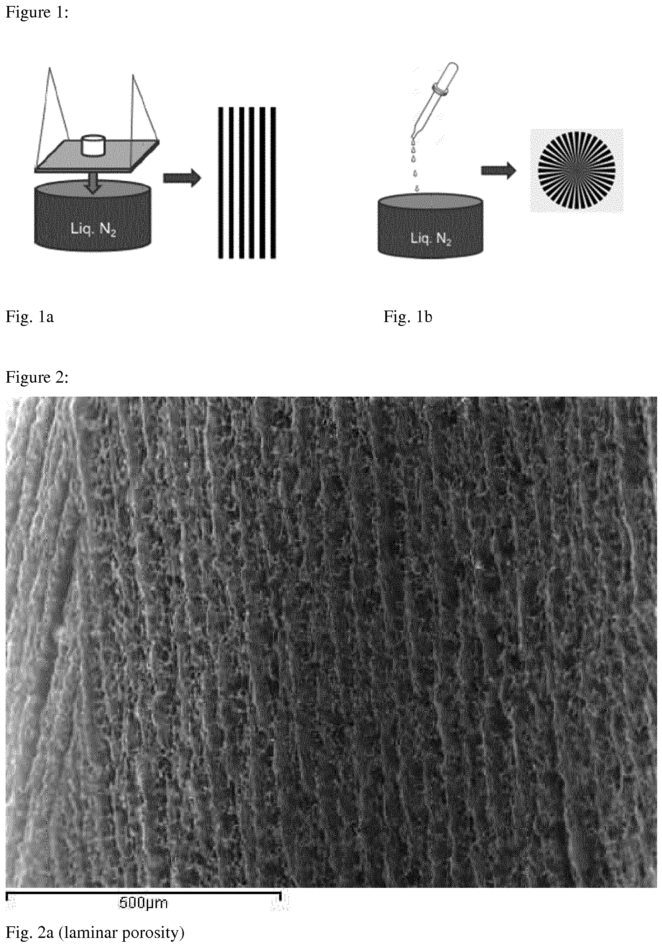

The term "laminar porosity" as used herein describes a structure wherein more than one, i.e. multiple graphene oxide sheets and/or walls of graphene oxide sheets are stacked basically parallel to each other so that the average distance between two adjacent graphene oxide sheets and/or walls of graphene oxide sheets is basically constant. In other words, the macroscopic appearance of porous graphene oxide material (A) having laminar porosity is a layered structure wherein the graphene oxide sheets and/or walls of graphene oxide sheets are parallel stacked one over each other, thus forming a monolith form. In even other words, no particular center of the structure may be observed. The macroscopic shape of the monolith form is not particularly limited and may be for instance any three-dimensional structure having a polygon, ellipse, or circle as a basis, and preferably is a cylindrical, cuboid or cubic structure and most preferably a cylindrical structure. Also the dimensions of the monolith form are not particularly limited. Nonetheless, the monolith may have edge sizes (if a cuboid or cube) or an edge size and/or diameter (if cylindrical) in the range of 0.1 to 500 mm, preferably of 0.5 mm to 100 mm and more preferably of 1 to 50 mm, such as 5 to 40 mm or 10 to 30 mm. Figure 1a shows on the right side a schematic view of laminar porosity, wherein the black lines are the graphene oxide sheets and/or the walls of graphene oxide sheets and the white lines are the voids, i.e. empty, spaces in between. Figure 2a shows a picture obtained *via* SEM (Philips XL30 microscope equipped with an Oxford Instruments INCA500 detector) of a porous graphene oxide material (A) having laminar porosity which may be used in the composite of the present invention.

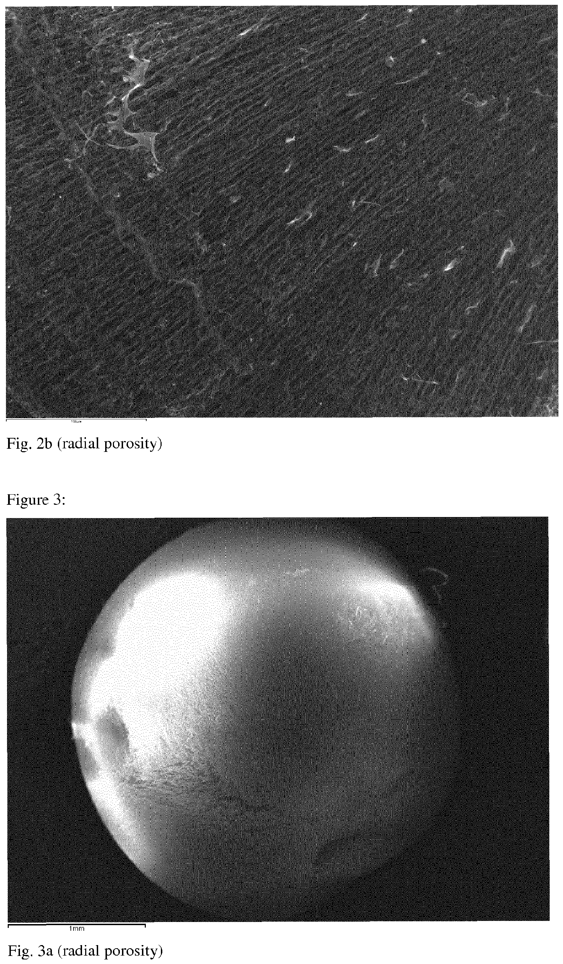

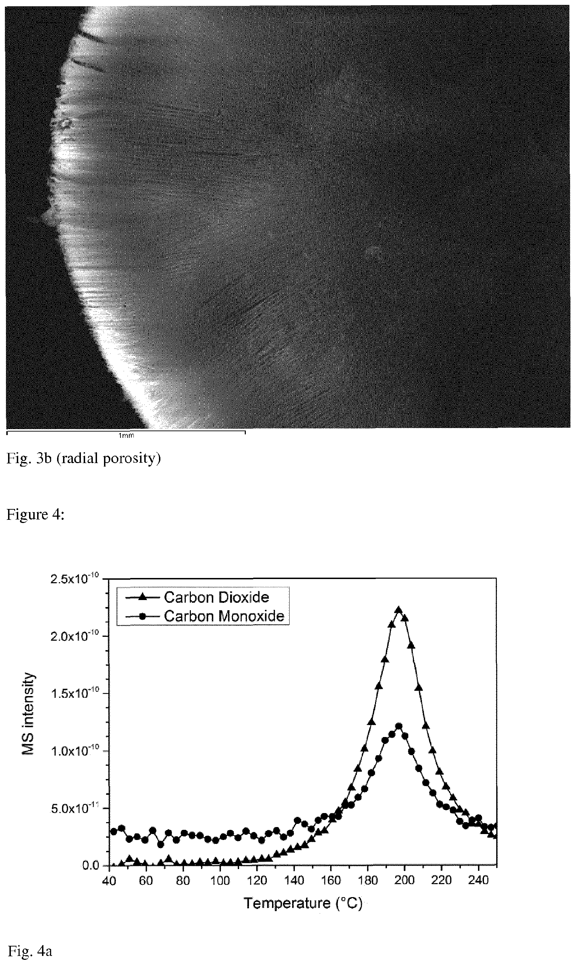

The term "radial porosity" as used herein describes a structure wherein more than one, i.e. multiple graphene oxide sheets and/or walls of graphene oxide sheets are stacked basically parallel to each other. However, the macroscopic appearance of porous graphene oxide material (A) having radial porosity is a centered structure. In other words, the graphene oxide sheets and/or walls of graphene oxide are directed to a common center. In even other words, porous graphene oxide material (A) having radial porosity may have a spherical or spherical-like or bead-like macroscopic structure and, hence, for instance a bead form. The beads may have a diameter of 0.01 to 100 mm, preferably of 0.1 mm to 50 mm and more preferably of 0.5 to 20 mm, such as 1 to 10 mm or 2 to 5 mm. The radial porosity can have a number of structural consequences such as for instance a slight decrease of the average distance between adjacent graphene oxide sheets and/or walls of graphene oxide sheets towards the center of the porous graphene oxide material (A) having radial porosity. Additionally and/or alternatively, it is also possible that some of the graphene oxide sheets and/or walls of graphene oxide sheets might terminate in proximity of the center of the porous graphene oxide material (A) having radial porosity. Figure 1b shows on the right side a schematic view of radial porosity, wherein the black lines are the graphene oxide sheets and/or the walls of graphene oxide sheets and the white lines are the voids, i.e. empty, spaces in between. Figure 2b shows a picture obtained via scanning electron microscopy (Philips XL30 microscope equipped with an Oxford Instruments INCA500 detector) of a porous graphene oxide material (A) having radial porosity which may be used in the composite of the present invention. Additionally, Figure 3 shows scanning electron microscopy pictures of a porous graphene oxide material (A) having radial porosity.

The graphene oxide material (A) may be obtained by a method comprising the steps of
(I) sonication dispersion of a graphene oxide suspension,
(II) ice templating of the sonicated graphene oxide suspension so to obtain frozen monoliths or beads of the graphene oxide suspension, and
(III) freeze drying the obtained frozen beads of the graphene oxide suspension.

In step (I), a graphene oxide suspension in a solvent is dispersed by sonication dispersion.

Sonication may be performed using any commercial available sonication equipment, such as for instance an Elma S30 Elmasonic bath from Elma Schmidbauer GmbH (Stuttgart, Germany). The duration of sonication is not limited. However, for ensuring best dispersion results, sonication is performed for at least 30 seconds, preferably for at least 1 minute, more preferably for at least 2 minutes and most preferably for at least 5 minutes. In view of procedural efficiency, sonication is usually performed for not longer than 30 minutes and preferably for not longer than 10 minutes.

The solvent as such is not limited and may be any organic or inorganic solvent such as ethanol, acetonitrile, tetrahydrofuran and water (among others) or may also be a mixture of solvents such as a mixture of two or more of the aforementioned solvents. However, water is preferred as a solvent.

The dispersion may have a concentration of graphene oxide of between 1 and 100 mg/mL, preferably between 5 and 50 mg/mL, more preferably between 10 and 30 mg/mL and most preferably between 14 and 20 mg/mL.

The graphene oxide used may be commercial available graphene oxide or may be graphene oxide synthesized by any suitable method known to the skilled person. For instance, the graphene oxide may be synthesized from graphene, graphene agglomerates or graphite following Tour's method as set forth for instance in "Improved Synthesis of Graphene Oxide", Marcano et al., ACS Nano, vol.4, no. 8, 2010. In general, in Tour's method, a powder mixture of potassium permanganate and graphene agglomerates is added to a cooled mixture of sulphuric acid and phosphoric acid. The resulting mixture is warmed, added to cold water and further treated with hydrogen peroxide. Finally, solids are separated from the resulting mixture and washed with water.

In step (II), ice templating of the sonicated graphene oxide suspension is performed so to obtain frozen monoliths or beads of the graphene oxide suspension.

For ice templating, the sonicated graphene oxide suspension is cooled by a cooling agent. The cooling agent as such is not limited any may be for instance any cooling agent which is able to freeze the sonicated graphene oxide suspension depending on the solvent or mixture of solvents used. Thus, the cooling agent may be for instance a gas, such as a liquid gas, such as liquid nitrogen, liquid hydrogen, liquid argon or liquid helium, or dry ice (carbon dioxide), methanol and/or ammonia and preferably is liquid nitrogen. Preferably, the cooling is performed by adding the graphene oxide suspension directly into the cooling agent.

For instance, the sonicated graphene oxide suspension obtained in step (I) may be dropped into a bath of the cooling agent, for instance a liquid gas bath, preferably a liquid nitrogen bath, using a pipette or syringe and/or needle. In this case a temperature gradient will form between the outer surface of the spherical or spherical-like drops toward the drop center. In other words, the outer surface is cold while the core of each drop is at higher temperature. The crystals of frozen solvent, for instance ice crystals if water is used a solvent, then grow following this temperature gradient. This method leads to graphene oxide material (A) having radial porosity, i.e. to beads. Figure 1b) shows on the left side a schematic view of this method of dropping the sonicated graphene oxide suspension into a bath of a cooling agent.

Alternatively, the sonicated graphene oxide suspension obtained in step (I) may be classically poured into a mould on a metallic plate. The mould may have any shape, such as for instance defined above for the monolith form, and may be made of any suitable material. However, a preferred mould is a Teflon mould. The metallic plate serves as a high thermal conductivity medium and may be made from any suitable metal or metal alloy, preferably from copper, aluminium, steel, such as for example stainless steel, iron and nickel, mixtures thereof and/or alloys thereof. The mould may be attached to the metallic plate using vacuum grease. The liquid suspension is then poured into the mould. The metallic plate is suspended on the surface of the cooling agent, for instance the liquid gas, preferably the liquid nitrogen and the suspension cooled. In such a design the temperature gradient is vertical, leading to a laminar porosity. In case a monolith mould is used, the obtained graphene oxide material (A) has a monolith form. Figure 1a) shows on the left side a schematic view of this method of cooling a mould in which a sonicated graphene oxide suspension has been poured into a bath of a cooling agent.

As is apparent from the above, it is possible to engineer either laminar porosity (for instance in monoliths) or radial porosity (for instance in beads) by altering the geometry of the temperature gradient. Additionally, it is also possible to tune the thickness of the walls of the graphene oxide sheets *via* control of the temperature gradient. Without being bond to theory, the following mechanism is suggested. A fast cooling rate will generate a high number of nucleation points and therefore numerous crystals of frozen solvent, such as for instance ice crystals if water is used as the solvent. This creates less space between the crystals with the effect of making the wall of the material thinner. By contrast, a reduced cooling rate facilitates the growth of fewer crystals of frozen solvent (*via* fewer nucleation points), such as for instance ice crystals if water is used as the solvent, and therefore generates thicker walls in the material.

In step (III) freeze drying of the obtained frozen monoliths or beads of the graphene oxide suspension is performed to evaporate the solvent. Freeze drying is commonly known by the skilled person and is performed by evacuating a vessel containing the substance to be dried while, at the same time, cooling the vessel from the outside. For instance, freeze drying may be performed under reduced pressure such as a pressure of 10.000 Pa or below, preferably 1000 Pa or below and most preferably 100 Pa or below. The duration of freeze drying may vary from several minutes to several hours or even days. Usually, freeze drying is performed for at least one hour, preferably for at least 2 hours and most preferably for at least 5 hours. However, for efficiency reasons, freeze drying is usually performed no longer than 48 hours and preferably no longer than 24 hours. Typically, freeze drying is performed for 16 to 24 hours. As will be appreciated, the particular choice of pressure and duration also depends on the size of the monoliths or beads to be freeze dried as well as on the solvent to be evaporated and can be readily estimated by the skilled person. The cooling of the vessel containing the substance to be cooled may be performed in an ice bath or, preferably, using a liquid gas, such as liquid nitrogen.

The graphene oxide material (A) or the graphene oxide which may be used to prepare the graphene oxide material (A) may additionally be heat pre-treated. Heat pre-treatment means that the graphene oxide material (A) or the graphene oxide which may be used to prepare the graphene oxide material (A) is heated, for instance up to 250 °C and then cooled to room temperature. Heat pre-treatment may be performed at least once, such as for instance at least twice or at least three times. In other words, heat pre-treatment may be performed in multiple cycles but it also may only be performed once. Preferably, heat treatment is only performed only once for economic reasons. The duration of one cycle is not critical. However, it should be ensured that the heating rate is 10°C/min or lower and preferably 5°C/min or lower, such as for instance 4°C/min or 3°C/min or even 2°C/min. In view of procedural efficiency, a cycle preferably has a duration of around 120 minutes or less and 20 minutes or more and preferably around 50 to 100 minutes or more preferably around 50 to 80 minutes. For instance, if the graphene oxide material (A) is heated from 20°C to 250°C with a heating rate between 4 and 5°C/min, the duration of the heating is around 50 to 60 minutes. Using heat pre-treatment, it is possible to obtain graphene oxide material (A) or graphene oxide which may be used to prepare the graphene oxide material (A) which show a lower carbon monoxide and carbon dioxide release if heated in subsequent steps. A lower release of the known catalyst poisons carbon monoxide and carbon dioxide from material having hydrogen storage ability is principally desirable since it increases the lifetime and efficiency of a fuel cell catalyst using the stored hydrogen.

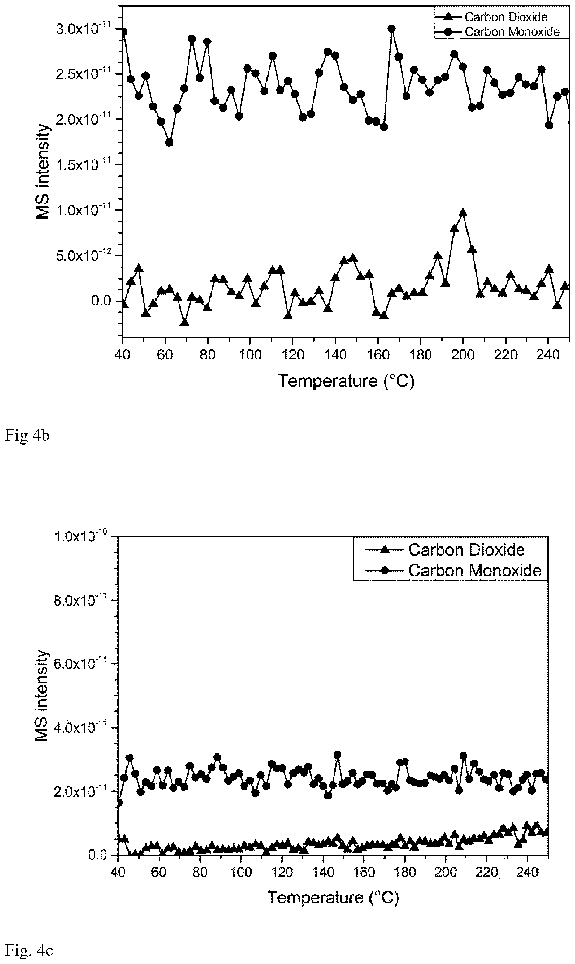

Figures 4a and 4b show the release of carbon monoxide and carbon dioxide during a first cycle (Figure 4a) and a second cycle (Figure 4b) of a heat pre-treatment of a graphene oxide material (A) according to the present invention as determined by Simultaneous Thermal Analysis (STA) coupled with Mass Spectroscopy (MS) analyses. The sample is heated up to a target temperature such as typically 250°C at a heating rate of 5°C/min), then cooled down to room temperature (first cycle) followed with another second heat cycle as before and so on. The STA-MS techniques are in general commonly known by the skilled person. However, details on the STA-MS techniques are for instance also provided in the publication "Calorimetry and Thermal Methods in Catalysis" by A. Auroux, Springer 2013. In the first cycle, some carbon dioxide and carbon monoxide is released while in the second cycle the release of carbon dioxide and carbon monoxide is already significantly reduced.

Figure 4c shows the thermal stability of a graphene oxide material (A) which has been heat pre-treated as determined by STA-MS analysis. The thermal stability is measured from room temperature to 250 °C with a heating rate of 5 °C/min. Neither carbon monoxide nor carbon dioxide is released and the total mass loss of the graphene oxide material (A) is less than 3 % by mass.

### Ammonia Borane (B):

In the composite of the present invention, any commercial available ammonia borane (B) may be used.

Ammonia borane (B) has a high gravimetric density of hydrogen which may be released when decomposed (19.6 wt. % or 190 g/kg) as well as a high volumetric density of hydrogen which may be released when decomposed (100-140 g/L), a light molecular weight (30.9 g/mol) and high stability in particular at room temperature. Ammonia borane (B) is a solid at room temperature, stable in air and water and has a higher gravimetric density than most other reported chemical hydride systems. Ammonia borane (B) decomposes in the following three steps when heated.

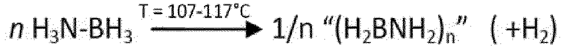

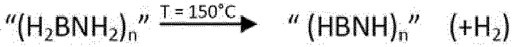

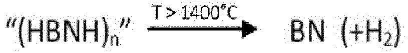

The two first steps provide about 12 wt% of hydrogen, surpassing the DoE targets. However, the hydrogen release temperatures of the first two steps are above the DoE targets. Also, the hydrogen released from neat ammonia borane contains various side products such as carbon monoxide, carbon dioxide, ammonia, diborane and borazine which are known to be catalyst poisons for fuel cells. In other words, there is a low selectivity of side products and the released hydrogen is of minor purity and even contains significant amounts of gas components which are known to be catalyst poisons for fuel cells.

It has now been found that, unexpectedly, in the composite of the present invention, the release temperature of hydrogen from ammonia borane (AB) can be reduced to lower temperatures more suitable for mobile applications. The nanoconfinement of the ammonia borane (B) in the composite of the present invention lowers the hydrogen release temperature. Furthermore, the nanoconfinement also increases the selectivity of side products. In other words, the hydrogen obtained from decomposition of the ammonia borane confined in the composite of the present invention also has an improved purity.

### Composite:

The composite of the present invention comprises a porous graphene oxide material (A) which may be the graphene oxide material (A) as described above and ammonia borane (B) which may be the ammonia borane (B) as described above, wherein the porous graphene oxide material (A) has a density of 1-100 mg/cm³.

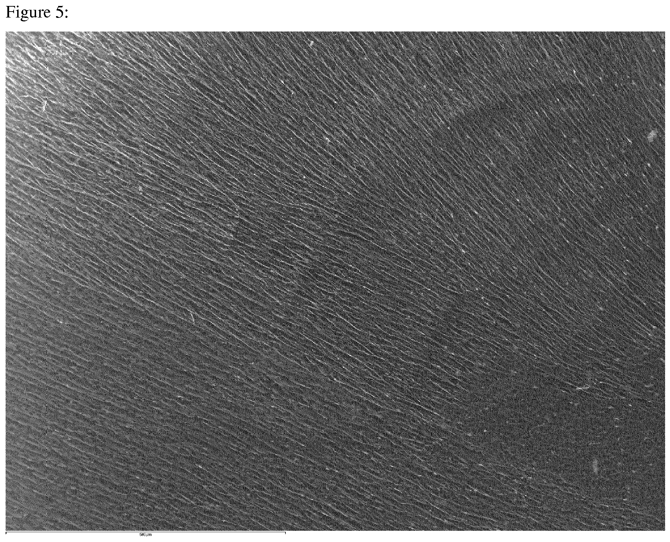

The composite of the present invention may have the same general structural characteristics as the graphene oxide material (A) as described above. In particular, the composite of the present invention may have radial porosity or laminar porosity, and preferably radial porosity, where radial porosity and laminar porosity is defined as described above. Figure 5 shows a picture of the composite of the present invention obtained by SEM (Philips XL30 microscope equipped with an Oxford Instruments INCA500 detector) with a ratio of ammonia borane to graphene oxide of 1:5. Moreover, the composite of the present invention may have a monolith form or a bead form and preferably a bead form, wherein monolith form and bead form are defined as described above. The monolith form or bead form, i.e. not a powder form, makes the composite of the present invention more robust and easier to handle. The monolith form or bead form also contributes to a lower toxic risk compared to powders in general and in particular to nanopowders since for instance formation of dust which may be inhaled is significantly decreased when handling the monoliths or beads. Additionally, if the composite of the present invention is used for instance in any hydrogen-releasing device, the risk of elution of the composite from the hydrogen-releasing device for instance with a hydrogen stream is in general significantly reduced when the composite has a monolith form or bead form.

The composite of the present invention may further have a sandwich-like structure with the ammonia borane (B) being confined between the graphene oxide sheets and/or walls of graphene oxide sheets. Hence, a sandwich-like structure as used herein is in principle a layered structure of alternating layers of graphene oxide sheets and/or walls of graphene oxide sheets and layers of ammonia borane (B). In other words and in more general terms, the ammonia borane (B) is trapped or confined in the porous graphene oxide material (A). For instance the ammonia borane molecules may be hold in a particular positon by the oxygen atoms of the graphene oxide material (A) via electrostatic interaction, such as for instance an ionic bond.

The composite of the present invention may be obtained by various methods, such as for instance an impregnation method wherein diffusion of ammonia borane (B) into the pores or voids of the graphene oxide material (A) is achieved by solving the ammonia borane (B) in a suitable solvent, such as for instance tetrahydrofuran, adding the ammonia borane (B) solution to the graphene oxide material (A), optionally further mixing, for instance by mechanical stirring and/or sonication the obtained mixture of ammonia borane (B) solution and graphene oxide material (A), and removing the solvent under reduced pressure or, alternatively, an ice-templating method. It is preferred that the composite of the present invention is prepared using an ice-templating method.

The composite of the present invention may preferably be obtained by a method, i.e. an ice-templating method, comprising the steps of
(i) sonication dispersion of a suspension comprising graphene oxide and ammonia borane (B),
(ii) ice templating of the sonicated suspension comprising graphene oxide and ammonia borane (B) so to obtain frozen monoliths or beads of the suspension comprising graphene oxide and ammonia borane (B), and
(iii) freeze drying the obtained frozen monoliths or beads of the suspension comprising graphene oxide and ammonia borane (B).

As will be appreciated, the ice-templating method to produce the composite of the present invention is based on the above described ice-templating method to produce the graphene oxide material (A). Hence, reference is made in general to the above detailed explanations of the corresponding method steps (I)-(III) of the method to produce the graphene oxide material (A) as described above. Any information given there also applies for the ice-templating method to produce the composite of the present invention.

In step (i), sonication dispersion of a suspension comprising graphene oxide and ammonia borane (B) is performed. In other words, in the ice-templating method to produce the composite of the present invention, graphene oxide and ammonia borane (B) are mixed first. The mixing may be performed in the solid state, followed by adding a solvent or adding one component in the solvent first and subsequently adding the other component. For instance the ammonia borane (B) may be added to a dispersion of graphene oxide. The ratio of the graphene oxide to the ammonia borane (B) is not particularly limited and may range from 100:1 to 1:10 by weight, preferably from 20:1 to 1:5 by weight, more preferably from 10:1 to 1:2 by weight, even more preferably from 5:1 to 1:2 by weight, and most preferably from 2:1 to 1:2. The solvent may be as described above and preferably is water. Also the graphene oxide may be obtained as described above, for instance by using the above-described Tour's method. Also the ammonia borane (B) may be as described above. Moreover, also the sonication dispersion may be performed as described above.

In step (ii), ice templating of the sonicated suspension comprising graphene oxide and ammonia borane is performed so to obtain frozen monoliths or beads of the suspension comprising graphene oxide and ammonia borane (B). Step (ii) may be performed in the same manner as step (II) of the method to produce the graphene oxide material (A) as described above with the only difference that a sonicated dispersion of a suspension comprising graphene oxide and ammonia borane (B) is used. Also here, the sonicated graphene oxide suspension or sonicated suspension of graphene oxide and ammonia borane (B) maybe dropped into a cooling agent, preferably into a liquid gas, and most preferably into liquid nitrogen, to obtain a composite having radial porosity, such as for instance beads. Alternatively, the sonicated graphene oxide suspension or sonicated suspension of graphene oxide and ammonia borane (B) may be poured into a mould on a metallic plate which is subsequently put on the surface of a cooling agent, preferably a liquid gas, and most preferably liquid nitrogen, and cooled to obtain a composite having laminar porosity, such as a monolith. For details of these two alternative ice-templating steps, reference is made to the above detailed description of corresponding method step (II) of the method for producing the porous graphene oxide material (A).

In step (iii), freeze drying of the obtained frozen monoliths or beads of the suspension comprising graphene oxide and ammonia borane (B) is performed. Step (iii) may be performed in the same manner as step (III) of the method to produce the graphene oxide material (A) as described above.

The graphene oxide which may be used in the above method to prepare the composite of the present invention may additionally be heat pre-treated. The heat-pretreatment of the graphene oxide may be performed before the mixing of graphene oxide and ammonia borane (B) in step (i) above. The heat pre-treatment of the graphene oxide may be performed in the same manner as described above in the method for preparing the porous graphene oxide material (A). Using heat pre-treatment, it is possible to obtain a composite having a lower carbon monoxide and carbon dioxide release if heated in subsequent steps, for instance for releasing hydrogen.

The composite of the present invention releases hydrogen of high purity upon heating. The hydrogen is produced by the above-described thermal decomposition of ammonia borane (B). In other words, the composite enables the decomposition of ammonia borane (B) in a selective way and without producing the catalyst poisons borazine and diborane. Moreover, also the formation of further catalyst poisoning by-products such as carbon-monoxide, carbon-dioxide and ammonia is effectively suppressed. The hydrogen released from the composite of the present invention, contains such by-products generally only in traces with an intensity as measured by STA-MS analyses being more than a factor 100 and for most by-products more than a factor 1000 lower than the intensity of hydrogen.

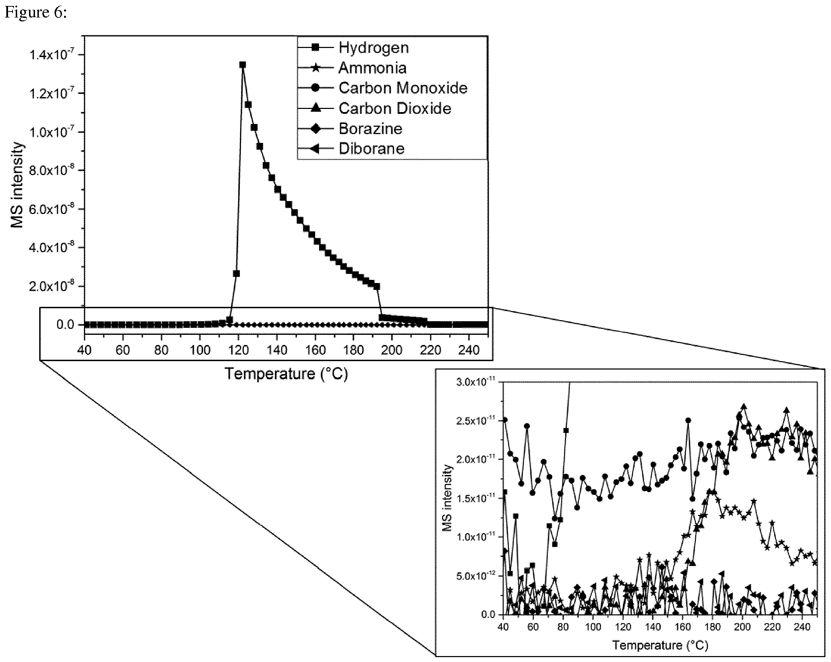

Figure 6 shows the results of a STA-MS study of a composite according to the present invention wherein the ammonia borane to graphene oxide weight ratio is 1:1. No borazine and no diborane is detectable even when the composite is heated up to 250°C. Furthermore, the amounts of the by-products carbon monoxide, carbon dioxide and ammonia are very low and close to the detection limit. The content of all by-products is at least a factor 1000 lower in relation to the amount of released hydrogen. The amount of the by-products carbon dioxide and carbon monoxide can even further be reduced using the above-described additional heat treatment.

Additionally, the dehydrogenation temperature, i.e. the temperature at which a compound decomposes by releasing hydrogen, of ammonia borane (B) which is confined in graphene oxide in the composite of the present invention is lower than the dehydrogenation temperature of neat ammonia borane. Figure 6 shows that the hydrogen release already starts at around 110 °C.

Even further, the decomposed material, i.e. the composite of the present invention after releasing hydrogen, does not foam. In other words, the structure of the composite is remained. Due to the non-foaming, there is no change in the material volume which is desirable since a constant volume is important in the design systems for potential applications. Additionally, the composite material can be easier reused and/or recycled and loss of material can be avoided.

### Method:

The present invention further provides a method for preparing a composite comprising the steps of
(i) sonication dispersion of a suspension comprising graphene oxide and ammonia borane (B)
(ii) ice templating of the sonicated suspension comprising graphene oxide and ammonia borane (B) so to obtain frozen monoliths or beads of the suspension comprising graphene oxide and ammonia borane (B) and
(iii) freeze drying the obtained frozen monoliths or beads of the suspension comprising graphene oxide and ammonia borane (B).

The method steps are the same as already described above for the ice-templating method for producing the composite of the present invention. Preferably, the ice templating of step (ii) is performed by either
(ii-a) dropping the sonicated graphene oxide suspension or sonicated suspension of graphene oxide and ammonia borane (B) into a cooling agent, preferably into a liquid gas, and most preferably into liquid nitrogen, or
(ii-b) pouring the sonicated graphene oxide suspension or suspension of sonicated graphene oxide and ammonia borane (B) into a mould on a metallic plate which is subsequently put on the surface of a cooling agent, preferably a liquid gas, and most preferably liquid nitrogen, and cooling the suspension.

Details of method steps (ii-a) and (ii-b) are as described above for the ice-templating method for producing the composite of the present invention.

The present invention further provides a composite, which is obtainable by the aforementioned method.

The present invention further provides a hydrogen-releasing device comprising the composite of the present invention. For instance, such hydrogen releasing device may contain beads or monoliths of the composite of the present invention. Due to the size of the beads or monoliths in the mm-range, they are less likely to be eluted from the hydrogen-releasing device and, hence, there is less toxic risk. Even further, the beads and monoliths have stable and relatively robust structures and, hence, are resistant to mechanical stress and are also suitable for extended cycling.

The present invention further provides an energy-producing device comprising the composite of the present invention and a fuel cell. For instance the energy-producing device may comprise a hydrogen-releasing device comprising the composite of the present invention and a fuel cell. The energy-producing device may be used to supply electrical power for instance in an aircraft to local components such as various types of cabin equipment such as area heaters, cabin ventilation, independent ventilation, area or spot lights such as cabin lights and/or reading lights for passenger scats, high comfort scats, water supply, charging stations for passenger electronics and electrical sockets, galley and galley devices, emergency lighting, emergency torches, electrical equipment of life rafts and also auxiliary power units (APU) for mission aircrafts.

The present invention further provides a use of the hydrogen-releasing device of the present invention or the energy-producing device of the present invention to supply electrical power to local components of an aircraft.

The work leading to this invention has received funding from the European Union's Seventh Framework Programme (FP7/2007-2013) under grant agreement n° 303447.

### Examples

### Example 1: Preparation of graphene oxide

Graphene oxide (GO) is synthesised following Tour's method. 360 mL of sulphuric acid (analytical reagent grade, as received from Fisher) and 40 mL of phosphoric acid (85% aq. as received from Alfa Aesar) are mixed and cooled in an ice bath (0 °C, mix of water and ice). Once cooled to temperature, 18 g of potassium permanganate (ACS reagent >99.0%, as received from Sigma-Aldrich) are mixed with 3 g of graphene agglomerates (graphene nanoplatelet aggregates as received from Alfa Aesar). The powder is then added to the acid mixture. The solution is left to warm to room temperature and heated to 50 °C for 16 h. The mixture is poured into 400 mL of cold deionised water followed by the addition of 7 mL hydrogen peroxide (Hydrogen peroxide 30% as received from VWR). The final mixture is left to warm to room temperature. The solution is centrifuged to separate the dispersed graphene oxide followed by the exchange of the supernatant solution with deionised water. At least 10 such washes are performed.

### Example 2: Preparation of graphene oxide material (A)

The washed graphene oxide dispersion that has been obtained in Example 1 is modified to a concentration of 20 mg/mL. The dispersion is sonicated using an Elma S30 Elmasonic bath and transferred to a syringe equipped with a needle. Drops of the concentrate are added by syringe to liquid nitrogen to obtain solid saturated beads. The frozen beads are then freeze dried with a pressure at about 3·10⁻¹ mbar (about 30 Pa) and temperature from -198 °C to room temperature.

The obtained material has a density of about 8 to 12 mg/cm³, a well-defined and visible radial porosity and an average wall to wall distance of around 30 µm. Figures 3a, 3b and 2b are pictures of the obtained material.

### Example 3: Preparation of a composite

The washed graphene oxide dispersion that has been obtained in Example 1 is modified to a concentration of 20 mg/mL. 100 mg of ammonia borane (as received from Sigma, 97%) is mixed into 5 ml of the graphene oxide dispersion having a concentration of 20 mg/mL. The obtained dispersion is sonicated using an Elma S30 Elmasonic bath and transferred to a syringe equipped with a needle. Drops of the concentrate are added by syringe to liquid nitrogen to obtain solid saturated beads. The frozen beads are then freeze dried with a pressure at about 3·10⁻¹ mbar (about 30 Pa) and temperature from -198 °C to room temperature.

The obtained material has a radial porosity and a density of about 25 mg/ cm³ to 30 mg/cm³, as well as an average wall to wall distance of around 20µm to 30 µm. Figure 6 shows the results of a STA-MS study of the obtained material. No borazine and no diborane can be detected. Furthermore, the amounts of the by-products carbon monoxide, carbon dioxide and ammonia are very low and close to the detection limit. The content of all by-products is at least a factor 1000 lower in relation to the amount of released hydrogen.

## Claims

1. A composite comprising a porous graphene oxide material and ammonia borane wherein the porous graphene oxide material has a density of 1-100 mg/cm³.

2. The composite of claim 1 wherein the porous graphene oxide material has a density of 5-50 mg/cm³ and preferably of 8-20 mg/cm³.

3. The composite of claim 1 or 2 wherein the porous graphene oxide material comprises graphene oxide sheets and/or walls which are an assembly of graphene oxide sheets.

4. The composite of any of claims 1 to 3 wherein the graphene oxide sheets and/or the walls of the porous graphene oxide material are 1-100 µm, preferably 5-50 µm and most preferably 20-40 µm apart.

5. The composite of any of claims 1 to 4, wherein the graphene oxide material has a radial porosity or laminar porosity.

6. The composite of any of claims 3 to 5, wherein the composite has a sandwich-like structure with the ammonia borane being confined between the graphene oxide sheets and/or walls of graphene oxide sheets.

7. The composite of any of claims 1 to 6, which has a monolith form or a bead form and preferably a bead form.

8. The composite of any of claims 1 to 7, wherein the graphene oxide material is obtainable by a method comprising the steps of
(I) sonication dispersion of a graphene oxide suspension,
(II) ice templating of the sonicated graphene oxide suspension so to obtain frozen monoliths or beads of the graphene oxide suspension, and
(III) freeze drying the obtained frozen monoliths or beads of the graphene oxide suspension.

9. The composite of any of claims 1 to 7, which is obtainable by a method comprising the steps of
(i) sonication dispersion of a suspension comprising graphene oxide and ammonia borane,
(ii) ice templating of the sonicated suspension comprising graphene oxide and ammonia borane so to obtain frozen monoliths or beads of the suspension comprising graphene oxide and ammonia borane, and
(iii) freeze drying the obtained frozen monoliths or beads of the suspension comprising graphene oxide and ammonia borane.

10. The composite of claim 8 or 9, wherein the ice-templating is performed by either
(ii-a) dropping the sonicated graphene oxide suspension or sonicated suspension of graphene oxide and ammonia borane into a cooling agent, preferably into a liquid gas, and most preferably into liquid nitrogen, or
(ii-b) pouring the sonicated graphene oxide suspension or sonicated suspension of graphene oxide and ammonia borane into a mould on a metallic plate which is subsequently put on the surface of a cooling agent, preferably a liquid gas, and most preferably liquid nitrogen, and cooling the suspension.

11. A method for preparing a composite according to any of claims 1 to 7 comprising the steps of
(i) sonication dispersion of a suspension comprising graphene oxide and ammonia borane,
(ii) ice templating of the sonicated suspension comprising graphene oxide and ammonia borane so to obtain frozen monoliths or beads of the suspension comprising graphene oxide and ammonia borane and
(iii) freeze drying the obtained frozen monoliths or beads of the suspension comprising graphene oxide and ammonia borane.

12. A hydrogen-releasing device comprising the composite according to any of claims 1 to 10.

13. An energy-producing device comprising the composite according to any of claims 1 to 10 and a fuel cell.

14. Use of the hydrogen-releasing device of claim 12 or the energy-producing device of claim 13 to supply electrical power to local components of an aircraft.

## Patentansprüche

1. Verbundstoff, umfassend ein poröses Graphenoxidmaterial und Ammoniakboran, wobei das poröse Graphenoxidmaterial eine Dichte von 1-100 mg/cm³ aufweist.

2. Verbundstoff nach Anspruch 1, wobei das poröse Graphenoxidmaterial eine Dichte von 5-50 mg/cm³ und vorzugsweise von 8-20 mg/cm³ aufweist.

3. Verbundwerkstoff nach Anspruch 1 oder 2, wobei das poröse Graphenoxidmaterial Graphenoxidplatten und/oder Wände umfasst, die eine Anordnung von Graphenoxidplatten sind.

4. Verbundwerkstoff nach einem der Ansprüche 1 bis 3, wobei die Graphenoxidblätter und/oder die Wände des porösen Graphenoxidmaterials 1-100 µm, vorzugsweise 5-50 µm und am meisten bevorzugt 20-40 µm voneinander entfernt sind.

5. Verbundwerkstoff nach einem der Ansprüche 1 bis 4, wobei das Graphenoxidmaterial eine radiale Porosität oder eine laminare Porosität aufweist.

6. Verbundwerkstoff nach einem der Ansprüche 3 bis 5, wobei der Verbundwerkstoff eine sandwichartige Struktur aufweist, bei der das Ammoniakboran zwischen den Graphenoxidschichten und/oder Wänden von Graphenoxidschichten eingeschlossen ist.

7. Verbundstoff nach einem der Ansprüche 1 bis 6, der eine monolithische Form oder eine Perlenform und vorzugsweise eine Perlenform aufweist.

8. Verbundwerkstoff nach einem der Ansprüche 1 bis 7, wobei das Graphenoxidmaterial durch ein Verfahren erhältlich ist, das die folgenden Schritte umfasst
(I) Dispergieren einer Graphenoxid-Suspension durch Beschallung,
(II) Eisschablonieren der beschallten Graphenoxid-Suspension, um gefrorene Monolithen oder Kügelchen der Graphenoxid-Suspension zu erhalten, und (III) Gefriertrocknen der erhaltenen gefrorenen Monolithen oder Kügelchen der Graphenoxid-Suspension.

9. Verbundwerkstoff nach einem der Ansprüche 1 bis 7, der durch ein Verfahren erhältlich ist, das die folgenden Schritte umfasst
(i) Dispergieren einer Graphenoxid und Ammoniak-Boran umfassenden Suspension durch Beschallung,
(ii) Eisschablonieren der beschallten Suspension, die Graphenoxid und Ammoniakboran enthält, um gefrorene Monolithen oder Kügelchen aus der Graphenoxid und Ammoniakboran enthaltenden Suspension zu erhalten, und
(iii) Gefriertrocknen der erhaltenen gefrorenen Monolithen oder Kügelchen der Graphenoxid und Ammoniakboran umfassenden Suspension.

10. Verbundwerkstoff nach Anspruch 8 oder 9, wobei das Eis-Templaten durchgeführt wird durch entweder
(ii-a) Eintauchen der beschallten Graphenoxid-Suspension oder der beschallten Graphenoxid-Ammoniak-Boran-Suspension in ein Kühlmittel, vorzugsweise in ein Flüssiggas, und am meisten bevorzugt in flüssigen Stickstoff, oder
(ii-b) Gießen der beschallten Graphenoxid-Suspension oder der beschallten Graphenoxid-Ammoniak-Boran-Suspension in eine Form auf einer Metallplatte, die anschließend auf die Oberfläche eines Kühlmittels, vorzugsweise eines Flüssiggases und am meisten bevorzugt von flüssigem Stickstoff, gelegt wird, und Kühlen der Suspension.

11. Verfahren zur Herstellung eines Verbundstoffs nach einem der Ansprüche 1 bis 7, umfassend die Schritte
(i) Dispergieren einer Graphenoxid und Ammoniakboran enthaltenden Suspension durch Beschallung,
(ii) Eisschablonieren der beschallten Graphenoxid und Ammoniakboran umfassenden Suspension, um gefrorene Monolithe oder Kügelchen der Graphenoxid und Ammoniakboran umfassenden Suspension zu erhalten, und
(iii) Gefriertrocknen der erhaltenen gefrorenen Monolithen oder Kügelchen der Graphenoxid und Ammoniakboran enthaltenden Suspension.

12. Wasserstoff freisetzende Vorrichtung, umfassend den Verbundstoff nach einem der Ansprüche 1 bis 10.

13. Energieerzeugungsvorrichtung, umfassend den Verbundstoff nach einem der Ansprüche 1 bis 10 und eine Brennstoffzelle.

14. Verwendung der Wasserstoff freisetzenden Vorrichtung nach Anspruch 12 oder der Energie erzeugenden Vorrichtung nach Anspruch 13 zur Versorgung lokaler Komponenten eines Flugzeugs mit elektrischer Energie.

## Revendications

1. Un composite comprenant un matériau d'oxyde de graphène poreux et du borane d'ammoniac, dans lequel le matériau d'oxyde de graphène poreux a une densité de 1-100 mg/cm³.

2. Le composite de la revendication 1 dans lequel le matériau d'oxyde de graphène poreux a une densité de 5-50 mg/cm³ et de préférence de 8-20 mg/cm³.

3. Le composite de la revendication 1 ou 2 dans lequel le matériau d'oxyde de graphène poreux
comprend des feuilles d'oxyde de graphène et/ou des parois qui sont un assemblage de feuilles d'oxyde de graphène.

4. Le composite de l'une quelconque des revendications 1 à 3 dans lequel les feuilles d'oxyde de graphène et/ou les parois du matériau d'oxyde de graphène poreux sont espacées de 1 à 100 µm, de préférence de 5 à 50 µm et plus préférablement de 20 à 40 µm.

5. Le composite de l'une quelconque des revendications 1 à 4, dans lequel le matériau d'oxyde de graphène présente une porosité radiale ou une porosité laminaire.

6. Le composite de l'une quelconque des revendications 3 à 5, dans lequel le composite présente une structure de type sandwich, l'ammoniac borane étant confiné entre les feuilles d'oxyde de graphène et/ou les parois des feuilles d'oxyde de graphène.

7. Le composite de l'une quelconque des revendications 1 à 6, qui présente une forme monolithique ou une forme de bille et de préférence une forme de bille.

8. Le composite de l'une quelconque des revendications 1 à 7, dans lequel le matériau d'oxyde de graphène peut être obtenu par un procédé comprenant les étapes suivantes .
(I) dispersion par sonication d'une suspension d'oxyde de graphène,
(II) mise en température par la glace de la suspension d'oxyde de graphène soniquée de façon à obtenir des monolithes ou des perles congelés de la suspension d'oxyde de graphène, et (III) lyophilisation des monolithes ou des perles congelés obtenus de la suspension d'oxyde de graphène.

9. Le composite de l'une quelconque des revendications 1 à 7, qui peut être obtenu par un procédé comprenant les étapes suivantes
(i) dispersion par sonication d'une suspension comprenant de l'oxyde de graphène et de l'ammoniac borane,
(ii) mise en température par la glace de la suspension soniquée comprenant de l'oxyde de graphène et du borane d'ammoniac de façon à obtenir des monolithes ou des perles congelés de la suspension comprenant de l'oxyde de graphène et du borane d'ammoniac, et
(iii) la lyophilisation des monolithes ou billes congelés obtenus de la suspension comprenant de l'oxyde de graphène et du borane d'ammoniac.

10. Le composite de la revendication 8 ou 9, dans lequel le modelage de la glace est effectué soit par
(ii-a) en laissant tomber la suspension sonique d'oxyde de graphène ou la suspension sonique d'oxyde de graphène et de borane d'ammoniac dans un agent de refroidissement, de préférence dans un gaz liquide, et plus préférablement dans de l'azote liquide, soit
(ii-b) en versant la suspension d'oxyde de graphène sonifiée ou la suspension sonifiée d'oxyde de graphène et de borane d'ammoniac dans un moule sur une plaque métallique qui est ensuite placée sur la surface d'un agent de refroidissement, de préférence un gaz liquide, et tout particulièrement de l'azote liquide, et en refroidissant la suspension.

11. Procédé de préparation d'un composite selon l'une quelconque des revendications 1 à 7 comprenant les étapes de
(i) dispersion par sonication d'une suspension comprenant de l'oxyde de graphène et de l'ammoniac borane,
(ii) mise en température par la glace de la suspension soniquée comprenant de l'oxyde de graphène et du borane d'ammoniac de façon à obtenir des monolithes ou des billes congelés de la suspension comprenant de l'oxyde de graphène et du borane d'ammoniac et
(iii) la lyophilisation des monolithes ou billes congelés obtenus de la suspension comprenant de l'oxyde de graphène et du borane d'ammoniac.

12. Dispositif de libération d'hydrogène comprenant le composite selon l'une quelconque des revendications 1 à 10.

13. Dispositif de production d'énergie comprenant le composite selon l'une quelconque des revendications 1 à 10 et une pile à combustible.

14. Utilisation du dispositif de dégagement d'hydrogène de la revendication 12 ou du dispositif de production d'énergie de la revendication 13 pour fournir de l'énergie électrique à des composants locaux d'un aéronef.
